# EUROPÄISCHE PATENTSCHRIFT

(11) **EP 1 301 702 B1**
(45) Veröffentlichungstag und Bekanntmachung des Hinweises auf die Patenterteilung: **06.10.2004**
(21) Anmeldenummer: 01953821.4
(22) Anmeldetag: 03.07.2001
(51) Int. Cl.: F02M 61/18

(54) **BRENNSTOFFEINSPRITZSYSTEM**
FUEL INJECTION SYSTEM
SYSTEME D'INJECTION DE CARBURANT

(30) Priorität: 04.07.2000 DE 10032336
(43) Veröffentlichungstag der Anmeldung: 16.04.2003
(73) Patentinhaber: ROBERT BOSCH GMBH, 70442 Stuttgart (DE)
(72) Erfinder: ARNDT, Stefan, 70569 Stuttgart (DE); HERDEN, Werner, 70839 Gerlingen (DE)
(86) Internationale Anmeldenummer: PCT/DE2001/002398
(87) Internationale Veröffentlichungsnummer: WO 2002/002928

(56) Entgegenhaltungen:
- DE-A- 19 804 463
- DE-A- 19 827 219
- PATENT ABSTRACTS OF JAPAN vol. 2000, no. 12, 3. Januar 2001 (2001-01-03) & JP 2000 249026 A (OPTONIX SEIMITSU:KK), 12. September 2000 (2000-09-12)
- PATENT ABSTRACTS OF JAPAN vol. 1999, no. 05, 31. Mai 1999 (1999-05-31) & JP 11 050848 A (TOYOTA MOTOR CORP), 23. Februar 1999 (1999-02-23)
- PATENT ABSTRACTS OF JAPAN vol. 1995, no. 06, 31. Juli 1995 (1995-07-31) & JP 07 063061 A (MAZDA MOTOR CORP), 7. März 1995 (1995-03-07)

## Beschreibung

### Stand der Technik

Die Erfindung geht aus von einem Brennstoffeinspritzsystem nach der Gattung des Hauptanspruchs.

Aus der DE 198 27 219 A1 ist ein Brennstoffeinspritzsystem für eine Brennkraftmaschine bekannt, welche einen Injektor mit einer Brennstoffstrahleinstellplatte aufweist, welche erste Düsenlöcher besitzt, die entlang eines ersten Kreises angeordnet sind, sowie zweite Düsenlöcher, die entlang eines zweiten Kreises angeordnet sind. Der zweite Kreis hat einen Durchmesser, der größer als derjenige des ersten Kreises ist. Die Kreise sind dabei koaxial zu einer Mittelachse der Einstellplatte angeordnet. Jede Lochachse der zweiten Düsenlöcher bildet einen spitzen Winkel mit einer Referenzebene, die senkrecht zur Mittelachse des Ventilkörpers ist. Der Winkel ist kleiner als derjenige, der durch jede Lochachse der ersten Düsenlöcher mit der Referenzebene gebildet wird. Daher können Brennstoffzerstäubungen, die durch die ersten Düsenlöcher eingespritzt werden, weg von den Brennstoffzerstäubungen gerichtet werden, die durch die zweiten Düsenlöcher eingespritzt werden. Als ein Ergebnis stören die Brennstoffzerstäubungen, die durch die ersten Düsenlöcher eingespritzt werden, nicht die Brennstoff Zerstäubungen, die durch die zweiten Düsenlöcher eingespritzt werden, was es ermöglicht, eingespritzten Brennstoff geeignet zu zerstäuben.

Aus der DE 196 42 653 C1 ist ein Verfahren zur Bildung eines zündfähigen Brennstoff-/Luftgemisches bekannt. In den Zylindern von direkt einspritzenden Brennkraftmaschinen ist ein zündfähiges Brennstoff-/Luftgemisch bildbar, indem in jeden von einem Kolben begrenzten Brennraum mittels eines Injektors bei Freigabe einer Düsenöffnung durch Abheben eines Ventilgliedes von einem die Düsenöffnung umfassenden Ventilsitz Brennstoff eingespritzt wird. Um unter allen Betriebsbedingungen der Brennkraftmaschine, insbesondere im Schichtladungsbetrieb, eine verbrauchs- und emissionsoptimierte innere Gemischbildung in jedem Betriebspunkt des gesamten Kennfeldes zu ermöglichen, ist vorgesehen, daß der Öffnungshub des Ventilgliedes und die Einspritzzeit variabel einstellbar sind.

Aus der DE 198 04 463 A1 ist ein Brennstoffeinspritzsystem für gemischverdichtende, fremdgezündete Brennkraftmaschinen bekannt, welches mit einem Einspritzventil, das Brennstoff in einen von einer Kolben-/Zylinderanordnung gebildeten Brennraum einspritzt, und mit einer in den Brennraum ragenden Zündkerze versehen ist. Das Einspritzventil ist mit wenigstens einer Reihe über den Umfang der Einspritzdüse verteilt angeordneten Einspritzlöchern versehen. Durch eine gezielte Einspritzung von Brennstoff über die Einspritzlöcher wird ein strahlgeführtes Brennverfahren durch Bildung einer Gemischwolke realisiert, wobei wenigstens ein Strahl zur Zündung in Richtung auf die Zündkerze gerichtet ist. Weitere Strahlen sind vorgesehen, durch die eine wenigstens annähernd geschlossene bzw. zusammenhängende Gemischwolke gebildet wird.

Nachteilig an den aus den obengenannten Druckschriften bekannten Verfahren zur Gemischbildung bzw. Brennstoffeinspritzsystemen sind insbesondere die mangelnde Homogenität der Gemischwolke sowie das Problem, das zündfähige Gemisch in den Bereich der Funkenstrecke der Zündkerze zu transportieren. Um eine emissionsarme, brennstoffsparende Verbrennung zu ermöglichen, müssen in diesen Fällen komplizierte Brennraumgeometrien, Drallventile oder Verwirbelungsmechanismen benutzt werden, um einerseits den Brennraum mit dem Brennstoff-/Luftgemisch zu füllen und andererseits das zündfähige Gemisch zur Zündkerze zu führen.

Dabei wird zumeist die Zündkerze direkt angespritzt. Dies führt zu starker Verrußung der Zündkerze und häufigen Thermoschocks, wodurch die Zündkerze eine kürzere Lebensdauer aufweist.

Nachteilig an dem aus der DE 196 42 653 C1 bekannten Verfahren zur Bildung eines zündfähigen Brennstoff-/Luftgemisches ist zudem die Unmöglichkeit, insbesondere im Schichtladungsbetrieb kleine Brennstoffmengen präzise zuzumessen, da die Zeiten für das Öffnen bzw. Schließen des Brennstoffeinspritzventils nicht genau genug gesteuert werden können.

Nachteilig ist zudem, daß komplizierte Brennraumgeometrien sowie Brennstoffeinspritzventile mit Drallaufbereitung schwer herstellbar und kostenaufwendig in der Produktion sind.

### Vorteile der Erfindung

Das erfindungsgemäße Brennstoffeinspritzsystem mit den kennzeichnenden Merkmalen des Hauptanspruchs hat demgegenüber den Vorteil, daß durch die Anordnung von mindestens einer Reihe von Einspritzlöchern sowie einem zentralen Einspritzloch eine Gemischwolke im Brennraum gebildet wird, welche über einen stöchiometrischen bzw. leicht fetten Kern (0,8 < λ < 1,1) und eine magere Hülle (1,5 < λ < 2,5) verfügt.

Wenn sich der Kern der Gemischwolke zum Zündzeitpunkt im Bereich der Zündkerzenfunkenstrecke bewegt, kann der Kern schnell entflammen, durchbrennen und wiederum die magere Hülle entflammen. Dieses Brennverfahren zeichnet sich durch besonders geringe Stickoxydemissionen aus, da nur ein kleiner Teil der Gemischwolke, nämlich der innere stöchiometrische Kern, bei hoher Temperatur verbrennt und dabei nur geringfügig Stickoxyde freigesetzt werden, während die volumenmäßig deutlich größere magere Hülle bei niedrigerer Temperatur nahezu frei von Stickoxydemissionen verbrennen kann.

Durch die in den Unteransprüchen aufgeführten Maßnahmen sind vorteilhafte Weiterentwicklungen des im Hauptanspruch angegebenen Brennstoffeinspritzsystems möglich.

Von Vorteil ist insbesondere der unterschiedliche Durchmesser der Einspritzlöcher der mindestens einen Reihe umfänglich angeordneter Einspritzlöcher und des zentralen Einspritzlochs. Durch die geeignete Wahl der Lochdurchmesser kann ein mehr oder weniger fetter Kern des Einspritzkegels gestaltet werden.

Wird dabei der Durchmesser des zentralen Einspritzlochs größer gewählt als der Durchmesser der übrigen Einspritzlöcher, ist es zudem möglich, dem kegelförmigen Einspritzstrahl eine ungefähr fallschirmähnliche Form zu geben, wodurch zum einen der Brennraum besser ausgefüllt werden kann und zum anderen die Gemischwolke stöchiometrisch günstiger verteilt ist.

Dies kann besonders vorteilhaft bei zwei Reihen umfänglich angeordneter Einspritzlöcher realisiert werden, wenn man die Durchmesser der Einspritzlöcher der äußeren Reihe am kleinsten wählt, die Einspritzlöcher der inneren Reihe etwas größer gestaltet und das zentrale Einspritzloch den größten Durchmesser aufweist.

Von Vorteil ist auch eine geometrische Anordnung der Einspritzlöcher in der inneren und der äußeren Reihe, die jeweils einem Einspritzloch in der inneren Reihe zwei Einspritzlöcher in der äußeren Reihe zuordnet. Die Anzahl der Einspritzlöcher pro Reihe ist damit jeweils doppelt so groß wie die Anzahl von Einspritzlöchern in der nächst kleineren Reihe. Dadurch sind die Homogenität sowie die Ausgestaltung und Stöchiometrie der Gemischwolke je nach Anforderung realisierbar.

### Zeichnung

Ausführungsbeispiele der Erfindung sind in der Zeichnung vereinfacht dargestellt und in der nachfolgenden Beschreibung näher erläutert. Es zeigen:
- Fig. 1: einen schematischen Schnitt durch ein Ausführungsbeispiel eines Brennstoffeinspritzsystems gemäß dem Stand der Technik,
- Fig. 2A-D: einen Längs- und einen Querschnitt durch ein erstes Ausführungsbeispiel des Ventilkörpers des Brennstoffeinspritzventils eines erfindungsgemäßen Brennstoffeinspritzsystems sowie einen Längs- und einen Querschnitt durch die dadurch erzeugte Gemischwolke,
- Fig. 3A-D: einen Längs- und einen Querschnitt durch ein zweites Ausführungsbeispiel des Ventilkörpers des Brennstoffeinspritzventils eines erfindungsgemäßen Brennstoffeinspritzsystems sowie einen Längs- und einen Querschnitt durch die dadurch erzeugte Gemischwolke,
- Fig. 4A-D: einen Längs- und einen Querschnitt durch ein drittes Ausführungsbeispiel des Ventilkörpers des Brennstoffeinspritzventils eines erfindungsgemäßen Brennstoffeinspritzsystems sowie einen Längs- und einen Querschnitt durch die dadurch erzeugte Gemischwolke,
- Fig. 5: einen Querschnitt durch das abspritzseitige Ende des Ventilkörpers des Brennstoffeinspritzventils eines erfindungsgemäßen Brennstoffeinspritzsystems,
- Fig. 6: einen Längsschnitt durch ein weiteres Ausführungsbeispiel eines Ventilkörpers des Brennstoffeinspritzventils eines erfindungsgemäßen Brennstoffeinspritzsystems und
- Fig. 7: die durch ein weiteres Ausführungsbeispiel des erfindungsgemäßen Brennstoffeinspritzsystems erzeugte Gemischwolke.

### Beschreibung der Ausführungsbeispiele

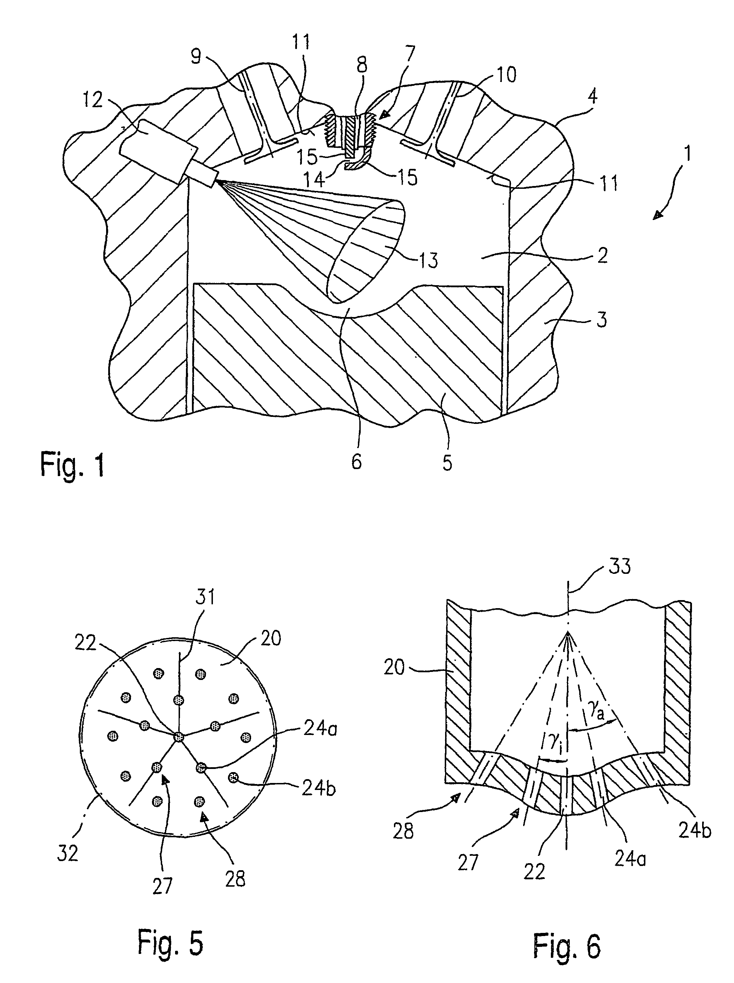

Fig. 1 zeigt einen schematischen Schnitt durch ein Ausführungsbeispiel eines Brennstoffeinspritzsystems gemäß dem Stand der Technik. Das Brennstoffeinspritzsystem 1 weist einen Brennraum 2 auf, welcher durch eine Zylinderwandung 3, einen Zylinderkopf 4 sowie einen Kolben 5 begrenzt wird. Im Kolben 5 ist eine Brennraummulde 6 ausgebildet. In einem First 7 des Brennraums 2 ist eine Zündkerze 8 mit zwei Elektroden 15 z. B. zentral angeordnet. Ein Einlaßventil 9 und ein Auslaßventil 10 sind an Firstschrägen 11 des Brennraums 2 angedeutet. Ein seitlich zwischen der Zylinderwandung 3 und dem Zylinderkopf 4 angeordnetes Brennstoffeinspritzventil 12 spritzt eine kegelförmige Gemischwolke 13 in den Brennraum 2 ein. Die Geometrie der Brennraummulde 6 sowie die Form der Gemischwolke 13 bestimmen den Weg der Gemischwolke 13 in den Bereich einer Funkenstrecke 14, welche sich zwischen den Elektroden 15 der Zündkerze 8 erstreckt. Die Gemischwolke 13 wird durch den elektrischen Funken der Zündkerze 8 gezündet.

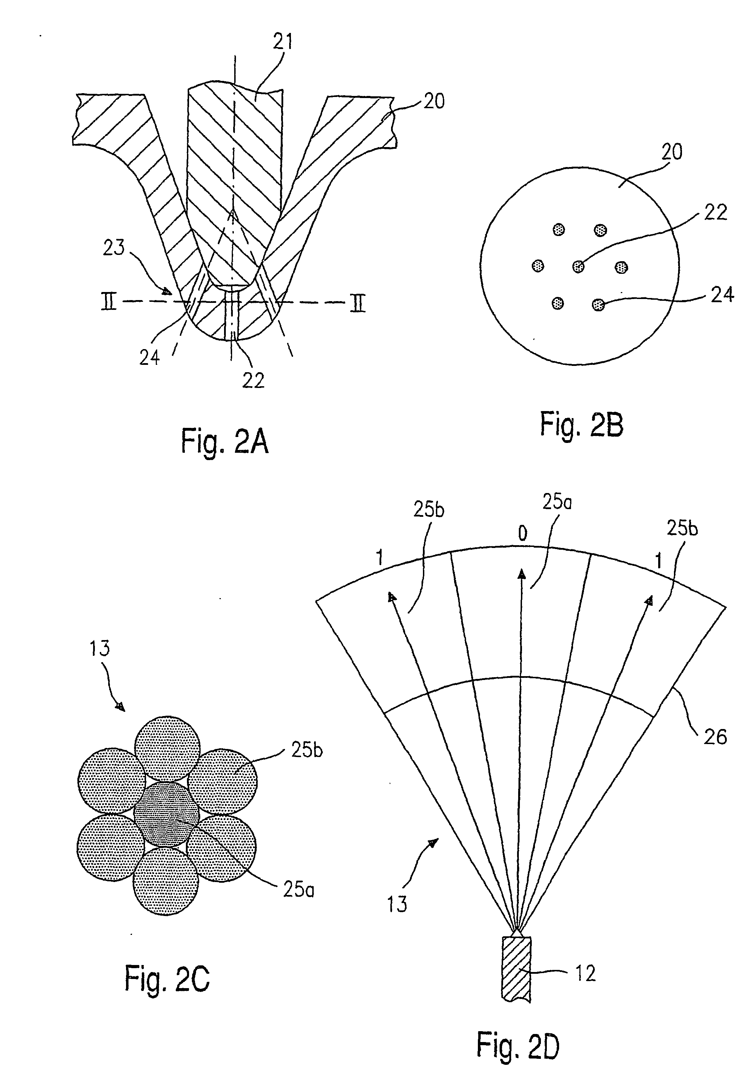

Fig. 2A-2D zeigen einen Längs- sowie einen Querschnitt durch ein erstes Ausführungsbeispiel eines Ventilkörpers 20 des Brennstoffeinspritzventils 12 eines erfindungsgemäßen Brennstoffeinspritzsystems 1 sowie einen Längs- und einen Querschnitt durch die von dem Brennstoffeinspritzventil 12 erzeugte Gemischwolke 13.

In Fig. 2A ist ein schematischer Längsschnitt durch den abspritzseitigen Teil des Brennstoffeinspritzventils 12 mit einem Ventilkörper 20, welcher mit einem Ventilschließkörper 21 zusammenwirkt, dargestellt. Der Ventilkörper 20 weist ein zentrales Einspritzloch 22 sowie eine Reihe 23 umfänglich angeordneter Einspritzlöcher 24 auf.

Wenn sich das Brennstoffeinspritzventil 12 im Ruhezustand befindet, werden die Einspritzlöcher 22 und 24 durch den Ventilschließkörper 21 abgedichtet. Wird das Brennstoffeinspritzventil 12 über einen magnetischen oder piezoelektrischen Aktor betätigt, hebt der mit einer nicht weiter dargestellten Ventilnadel verbundene Ventilschließkörper 21 vom Ventilkörper 20 ab und gibt die Einspritzlöcher 22 und 24 frei. Durch diese wird Brennstoff in den Brennraum 2 eingespritzt.

Fig. 2B zeigt einen Schnitt durch den Ventilkörper 20 entlang der in Fig. 2A mit II-II gekennzeichneten Linie: In der Mitte befindet sich das zentrale Einspritzloch 22. Die umfänglich angeordneten Einspritzlöcher 24 sind gleichmäßig über den Umfang des Ventilkörpers 20 verteilt. Im vorliegenden Ausführungsbeispiel wurden sechs Einspritzlöcher 24 gewählt.

Fig. 2C zeigt einen idealisierten Querschnitt durch die kegelförmige Gemischwolke 13, die von dem in Fig. 2A dargestellten Brennstoffeinspritzventil 12 erzeugt wird. Jedes der Einspritzlöcher 22 und 24 erzeugt einen kegelförmigen Einspritzstrahl 25. Ein innerer Einspritzstrahl 25a ist dabei von in diesem Ausführungsbeispiel sechs äußeren Einspritzstrahlen 25b umgeben. Die so entstandene Gemischwolke 13 weist wiederum eine ungefähr kegelförmige Einhüllende 26 auf und ist relativ homogen (Fig. 2D). Geringfügige Überschneidungen des inneren Einspritzstrahls 25a und der äußeren Einspritzstrahlen 25b führen zu einem leicht fetten Kern der Gemischwolke 13.

In Fig. 2D ist ein Längsschnitt durch die kegelförmige Gemischwolke 13, die von dem in Fig. 2A dargestellten Brennstoffeinspritzventil 12 erzeugt wird, dargestellt. Der mit 0 bezeichnete Pfeil stellt den durch das zentrale Einspritzloch 22 erzeugten inneren Einspritzstrahl 25a dar, während die mit 1 bezeichneten Pfeile die durch die umfänglich angeordneten Einspritzlöcher 24 erzeugten äußeren Einspritzstrahlen 25b darstellen. Die Einhüllende 26 der äußeren Einspritzstrahlen 25b breitet sich annähernd kegelförmig aus.

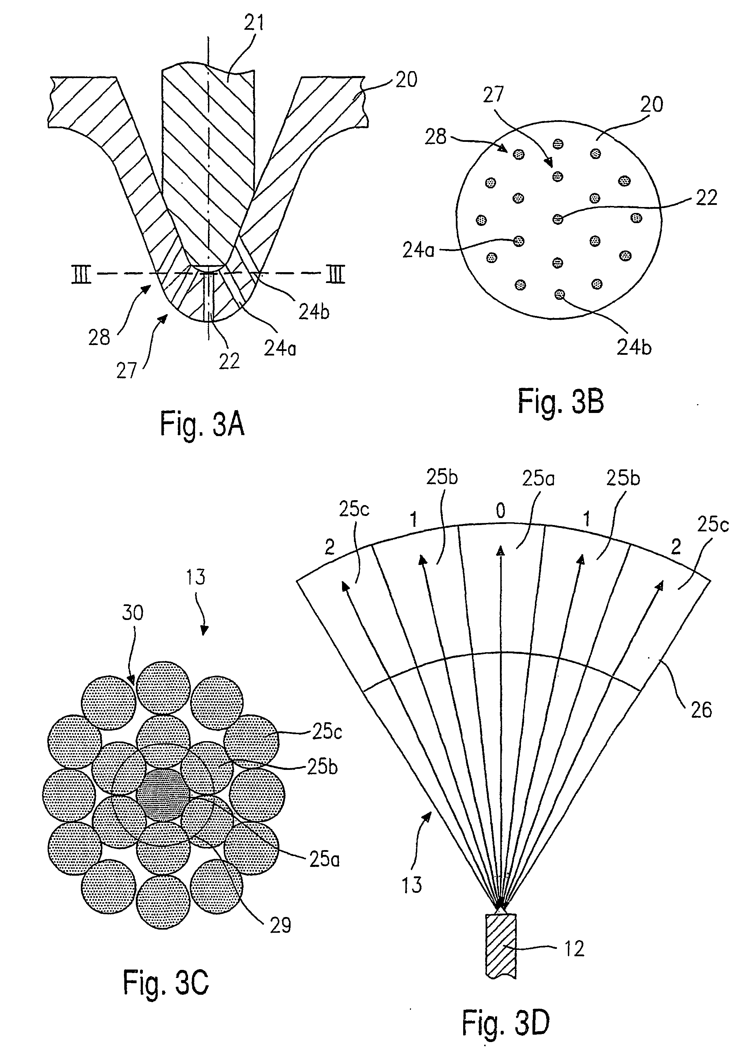

In Fig. 3A-3D sind analog zu Fig. 2A-2D der abspritzseitige Teil eines zweiten Ausführungsbeispiels des Brennstoffeinspritzventils 12 in einem Längs- und einem Querschnitt dargestellt sowie die dadurch erzeugte Gemischwolke 13 in einem Längs- und einem Querschnitt.

In Fig. 3A ist wiederum der abspritzseitige Teil des Brennstoffeinspritzventils 12 mit dem Ventilschließkörper 21 und dem Ventilkörper 20 dargestellt. Der Ventilkörper 20 weist im vorliegenden zweiten Ausführungsbeispiel neben dem zentralen Einspritzloch 22 eine innere Reihe 27 umfänglich angeordneter Einspritzlöcher 24a, und eine äußere Reihe 28 umfänglich angeordneter Einspritzlöcher 24b auf. Bei Betätigung des Brennstoffeinspritzventils 12 hebt der Ventilschließkörper 21 vom Ventilkörper 20 ab und gibt die Einspritzlöcher 22 sowie 24a und 24b frei.

Fig. 3B zeigt einen Querschnitt durch den Ventilkörper 20 entlang der in Fig. 3A mit III-III gekennzeichneten Linie. Um das zentrale Einspritzloch 22 sind Einspritzlöcher 24a der inneren Reihe 27 und Einspritzlöcher 24b der äußeren Reihe 28 angeordnet. Diese weisen in diesem Ausführungsbeispiel alle denselben Öffnungsquerschnitt auf.

Fig. 3C zeigt einen Querschnitt durch die Gemischwolke 13, welche durch das in Fig. 3A dargestellte Brennstoffeinspritzventil 12 erzeugt wird. Ein durch das zentrale Einspritzloch 22 erzeugter zentraler Einspritzstrahl 25a ist von den Einspritzstrahlen 25b der inneren Reihe 27 umfänglich angeordneter Einspritzlöcher 24a umgeben, welche wiederum von äußeren Einspritzstrahlen 25c umgeben sind, die von Einspritzlöchern 24b der äußeren Reihe 28 eingespritzt werden. Durch geringfügige Überlappungen der Einspritzstrahlen 25b mit dem zentralen Einspritzstrahl 25a wird ein fetter Kernbereich 29 erzeugt, welcher von einem mageren Mantelbereich 30 umgeben ist.

In Fig. 3D ist ein Längsschnitt durch die von dem in Fig. 3A dargestellten Brennstoffeinspritzventil 12 erzeugte Gemischwolke 13 dargestellt. Der mit 0 gekennzeichnete Einspritzstrahl 25a wird durch das zentrale Einspritzloch 22 erzeugt. Die mit 1 gekennzeichneten Einspritzstrahlen 25b werden durch die Einspritzlöcher 24a der inneren Reihe 27 und die mit 2 gekennzeichneten Einspritzstrahlen 25c werden durch die Einspritzlöcher 24b der äußeren Reihe 28 eingespritzt. Die Einhüllende 26 der Gemischwolke 13 breitet sich wiederum annähernd kegelförmig aus.

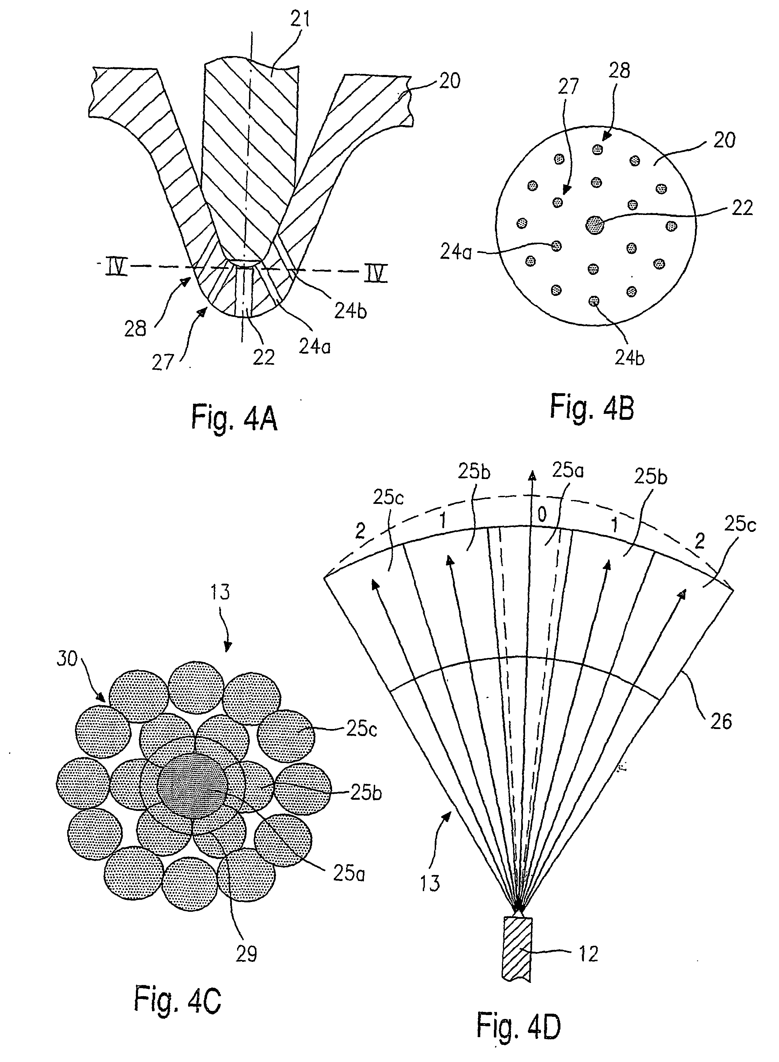

Fig. 4A-4D zeigen in analoger Weise zu den Fig. 2A - 2D und 3A - 3D ein Brennstoffeinspritzventil 12, dessen Ventilkörper 20 ein gegenüber Fig. 3A vergrößertes zentrales Einspritzloch 22 sowie eine innere Reihe 27 und eine äußere Reihe 28 umfänglich angeordneter Einspritzlöcher 24a und 24b umfaßt. Bei Betätigung des Brennstoffeinspritzventils 12 hebt der Ventilschließkörper 21 vom Ventilkörper 20 ab und gibt die Einspritzlöcher 22 sowie 24a und 24b frei.

Fig. 4B zeigt wiederum die Anordnung der Einspritzlöcher 22 und 24 in einer Schnittdarstellung entlang der mit IV-IV gekennzeichneten Linie. Das zentrale Einspritzloch 22 besitzt einen größeren Durchmesser als die auf der inneren Reihe 27 angeordneten Einspritzlöcher 24a und die auf der äußeren Reihe 28 angeordneten Einspritzlöcher 24b.

Fig. 4C zeigt, daß der durch das gegenüber den vorigen Ausführungsbeispielen vergrößerte zentrale Einspritzloch 22 hervorgerufene innere Einspritzstrahl 25a einen Kegel mit größerem Durchmesser hervorruft. Die Überlappungsbereiche des inneren Einspritzstrahls 25a mit den Einspritzstrahlen 25b der inneren Reihe 27 werden dadurch größer, der fette Kernbereich 29 der Gemischwolke 13 wird somit noch fetter. Der fette Kernbereich 29 der Gemischwolke 13 wird wiederum von einem mageren Mantelbereich 30 umgeben.

In Fig. 4D ist wiederum ein Längsschnitt durch die Gemischwolke 13 dargestellt, welche von dem in Fig. 4A dargestellten Brennstoffeinspritzventil 12 in den Brennraum 2 eingespritzt wird. Der innere Einspritzstrahl 25a, welcher durch das vergrößerte zentrale Einspritzloch 22 hervorgerufen wird, nimmt einen breiteren Raum ein als beispielsweise der in Fig. 3D dargestellte zentrale Einspritzstrahl 25a des kleiner dimensionierten zentralen Einspritzlochs 22. Der kleinere Kegeldurchmesser ist zum Vergleich mit gestrichelten Linien in Fig. 4D gekennzeichnet. Durch diese Anordnung kann der fette Kernbereich 29 in beliebiger Weise fetter oder magerer gestaltet sowie beliebig aufgeweitet werden. In den in den Fig. 3 und 4 dargestellten Ausführungsbeispielen weisen die innere Reihe 27 sechs Einspritzlöcher 24a und die äußere Reihe 28 zwölf Einspritzlöcher 24b auf.

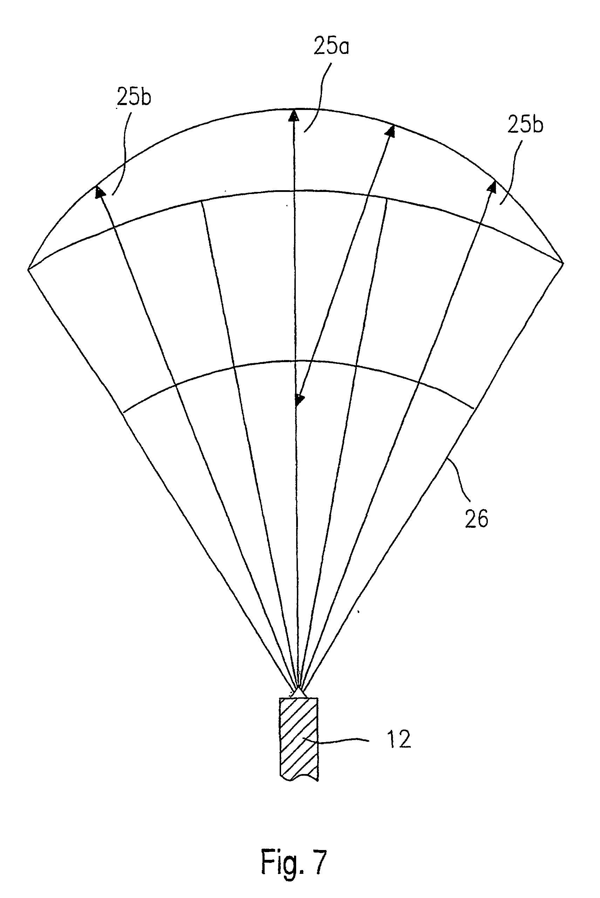

Eine besonders vorteilhafte Anordnung der Einspritzlöcher 24 ist in Fig. 5 dargestellt. Die vorliegende Abbildung zeigt einen Querschnitt durch das abspritzseitige Ende des Ventilkörpers 20 des Brennstoffeinspritzventils 12, beispielsweise entlang der Schnittlinie III-III in Fig. 3A.

In besonderer Weise ist hier die Anzahl der Einspritzlöcher 24a der inneren Reihe 27 und der Einspritzlöcher 24b der äußeren Reihe 28 miteinander verknüpft. Im vorliegenden Ausführungsbeispiel ist um ein zentrales Einspritzloch 22 eine Anzahl n=5 Einspritzlöcher 24a der inneren Reihe 27 verteilt. In der äußeren Reihe 28 ist die doppelte Anzahl 2n=10 Einspritzlöcher 24b verteilt. Die Einspritzlöcher 24b der äußeren Reihe 28 sind dabei so angeordnet, daß sie symmetrisch zu einer Halbgeraden 31 liegen, welche jeweils vom zentralen Einspritzloch 22 durch die Löcher 24a der inneren Reihe 27 in Richtung auf die äußere Reihe 28 ausgerichtet ist. Die äußeren Einspritzlöcher 24b sind jeweils symmetrisch zu dieser Halbgeraden 31 angeordnet. Allgemein ist die Anzahl der Einspritzlöcher 24 in jeder weiteren äußeren Reihe 32 immer doppelt so groß wie die Anzahl der Einspritzlöcher 24 in der benachbarten inneren Reihe. Auf diese Weise kann eine sehr homogene Gemischwolke 13 erzeugt werden.

In Fig. 6 ist zur Verdeutlichung der allgemeinen Zusammenhänge zwischen dem Durchmesser der Einspritzlöcher 24, des zentralen Einspritzlochs 22 sowie der unterschiedlichen Einspritzwinkel γᵢ und γₐ der abspritzseitige Teil des Ventilkörpers 20 des Brennstoffeinspritzventils 12 dargestellt. Die nachstehende Tabelle verdeutlicht in allgemeiner Form die optimale Auslegung eines Brennstoffeinspritzsystems 1 mit einem zentralen Einspritzloch 22 und mindestens zwei Reihen 27 und 28 umfänglich angeordneter Einspritzlöcher 24a und 24b.

| | Anzahl n der Löcher | Lochdürchmesser Φ | Neigungswinkel γ |
|---|---|---|---|
| zentral angeordnetes Einspritzloch | 0<n_{z}<1 | 50µm<Φ_{z}<200µm | 0° |
| innere Reihe Einspritzlöcher | 2<nᵢ<7 | 40µm<Φᵢ<180µm | 13°<γᵢ<27° |
| äußere Reihe Einspritzlöcher | 5<nₐ<14 | 30µm<Φₐ<160µm | 22°<γₐ<48° |

In der Tabelle ist für jede der Reihen 27 und 28 sowie das zentrale Einspritzloch 22 die Anzahl n_{z}, nᵢ, nₐ der Einspritzlöcher 24a und 24b, der Lochdurchmesser der Einspritzlöcher 22, 24a und 24b sowie der Neigungswinkel γᵢ bzw. γₐ der Achsen der Einspritzlöcher 22, 24a und 24b bzw. der Achsen der Einspritzstrahlen 25a, 25b und 25c relativ zu einer zentralen Ventilachse 33 angegeben. Demnach kann jede Anordnung von Einspritzlöchern 22, 24a und 24b in Reihen 27 und 28 durch ein Tripel (n, Φ, γ) beschrieben werden, wobei n die Anzahl von Einspritzlöchern 24a, 24b pro Reihe 27 und 28 bezeichnet, Φ den Durchmesser der Einspritzlöcher 22, 24a und 24b und γ den Neigungswinkel zur Ventilachse 33. Allgemein soll dabei gelten, daß der Durchmesser des zentralen Einspritzlochs 22 immer größer ist als der Durchmesser der Einspritzlöcher 24a der inneren Reihe 27, und dieser wiederum soll größer sein als der Durchmesser der Einspritzlöcher 24b der äußeren Reihe 28 (Φ_{z}>Φᵢ>Φₐ). Entsprechend werden die Durchmesser weiterer Reihen umfänglich angeordneter Einspritzlöcher 24 mit zunehmender Reihenzahl immer kleiner.

In Fig. 7 ist anhand eines Längsschnitts durch die von einem entsprechend gestalteten Brennstoffeinspritzventil 12 erzeugte Gemischwolke 13 dargestellt, wie die sukzessive Verkleinerung der Einspritzlöcher 24a, 24b vom zentralen Einspritzloch 22 nach außen, dazu führt, daß die kegelstumpfförmige Gemischwolke 13 durch hydrodynamische Vorgänge beim Durchströmen der Einspritzlöcher 24a, 24b bzw. 22 in eine annähernd fallschirmförmige Gemischwolke 13 verformt wird. Dieser Effekt wird dadurch hervorgerufen, daß die mit einem kleineren Durchmesser versehenen Einspritzlöcher 24a und 24b in der ersten Reihe 27 bzw. der zweiten Reihe 28 pro Zeiteinheit von weniger Brennstoff durchströmt werden als das größere zentrale Einspritzloch 22. Dadurch wird der aus dem zentralen Einspritzloch 22 austretende Brennstoff weiter in die Brennkammer 2 eingespritzt als der Brennstoff, welcher durch die Einspritzlöcher 24a bzw. 24b tritt. Als Folge kann die Gemischwolke 13 den Brennraum 2 besser ausfüllen. Der stöchiometrische fette Kernbereich 29 kann besser in den Bereich der Funkenstrecke 14 der Zündkerze 8 gebracht werden und die Verbrennung kann effektiver unter geringerem Brennstoffverbrauch bzw. geringeren Emissionen gestaltet werden.

Durch die allgemeine Formulierung können beliebige Auslegungen des Brennstoffeinspritzsystems passend zu den Anforderungen an die Brennkraftmaschine und die Brennraumgeometrie entworfen werden.

Die Erfindung ist nicht auf die dargestellten Ausführungsbeispiele beschränkt und z. B. auch für Brennstoffeinspritzventile mit mehr als zwei Reihen von Einspritzlöchern, andere Durchmesser der Einspritzlöcher oder eine andere Anzahl von Einspritzlöchern pro Reihe anwendbar.

## Patentansprüche

1. Brennstoffeinspritzsystem (1) für Brennkraftmaschinen mit einem Brennstoffeinspritzventil (12), das Brennstoff direkt in einen Brennraum (2) einspritzt, der von einer Zylinderwandung (3) gebildet wird, in der ein Kolben (5) geführt ist, und mit einer in den Brennraum (2) ragenden Zündkerze (8), wobei das Brennstoffeinspritzventil (12) in dem Brennraum (2) durch mindestens eine Reihe (23) auf einem Ventilkörper (20) des Brennstoffeinspritzventils (12) umfänglich angeordneter Einspritzlöcher (24) einen kegelförmigen Einspritzstrahl (13) erzeugt,
**dadurch gekennzeichnet,**
**daß** der ventilkörper (20) , zusätzlich ein zentral angeordnetes Einspritzloch (22) aufweist, das einen zur Zündkerze (8) gelangenden, mit Brennstoff angereicherten Zentralbereich des Einspritzstrahls (13) erzeugt.

2. Brennstoffeinspritzsystem nach Anspruch 1,
**dadurch gekennzeichnet,**
**daß** zwei Reihen (27, 28) von Einspritzlöchern (24a, 24b) vorgesehen sind.

3. Brennstoffeinspritzsystem nach Anspruch 1,
**dadurch gekennzeichnet,**
**daß** der Durchmesser der Einspritzlöcher (24; 24a, 24b) der mindestens einen Reihe (23; 27, 28) und des zentralen Einspritzlochs (22) unterschiedlich sind.

4. Brennstoffeinspritzsystem nach einem der Ansprüche 1 bis 3,
**dadurch gekennzeichnet,**
**daß** der Durchmesser des zentralen Einspritzlochs (22) größer ist als der Durchmesser der umfänglich auf der zumindest einen Reihe (23; 27, 28) angeordneten Einspritzlöcher (24; 24a, 24b).

5. Brennstoffeinspritzsystem nach Anspruch 4,
**dadurch gekennzeichnet,**
**daß** zwei Reihen (27, 28) umfänglich angeordneter Einspritzlöcher (24a, 24b) vorgesehen sind und der Durchmesser der Einspritzlöcher (24a) in einer dem zentralen Einspritzloch (22) näherliegenden inneren Reihe (27) größer ist als der Durchmesser der Einspritzlöcher (24b) in einer äußeren Reihe (28).

6. Brennstoffeinspritzsystem nach Anspruch 5,
**dadurch gekennzeichnet,**
**daß** der Durchmesser der Einspritzlöcher (24a, 24b) um so kleiner wird, je weiter diese vom zentralen Einspritzloch (22) entfernt sind.

7. Brennstoffeinspritzsystem nach Anspruch 5 oder 6,
**dadurch gekennzeichnet,**
**daß** die Anzahl der Einspritzlöcher (24b) der äußeren Reihe (28) doppelt so groß ist wie die Anzahl der Einspritzlöcher (24a) der inneren Reihe (27).

8. Brennstoffeinspritzsystem nach Anspruch 7,
**dadurch gekennzeichnet,**
**daß** jede weitere äußere Reihe (23) von umfänglich angeordneten Einspritzlöchern (24) doppelt so viele Einspritzlöcher (24) aufweist wie die nächst innere Reihe (23).

9. Brennstoffeinspritzsystem nach einem der Ansprüche 4 bis 8,
**dadurch gekennzeichnet,**
**daß** die Einspritzlöcher (24a) der inneren Reihe (27) winkelversetzt zu den Einspritzlöchern (24b) der äußeren Reihe (28) angeordnet sind, wobei jeweils zwei Einspritzlöcher (24b) der äußeren Reihe (28) symmetrisch zu einer Halbgeraden (31) angeordnet sind, welche sich vom zentralen Einspritzloch (22) durch jedes der Einspritzlöcher (24a) der inneren Reihe (27) zur äußeren Reihe (28) erstreckt.

## Claims

1. Fuel injection system (1) for internal combustion engines having a fuel injection valve (12) which injects fuel directly into a combustion chamber (2), the latter being formed by a cylinder wall (3) in which a piston (5) is guided, and having a spark plug (8) which projects into the combustion chamber (2), the fuel injection valve (12) producing a conical injection jet (13) in the combustion chamber (2) by means of at least one row (23) of injection holes (24) arranged around the circumference of a valve body (20) of the fuel injection valve (12), **characterized in that** the valve body (20) additionally has an injection hole (22) which is arranged in the centre and produces a central region of the injection jet (13), the said central region reaching the spark plug (8) and being enriched with fuel.

2. Fuel injection system according to Claim 1, **characterized in that** two rows (27, 28) of injection holes (24a, 24b) are provided.

3. Fuel injection system according to Claim 1, **characterized in that** the diameter of the injection holes (24; 24a, 24b) of the at least one row (23; 27, 28) and of the central injection hole (22) are different.

4. Fuel injection system according to one of Claims 1 to 3, **characterized in that** the diameter of the central injection hole (22) is larger than the diameter of the injection holes (24; 24a, 24b) arranged towards the circumference in the at least one row (23; 27, 28).

5. Fuel injection system according to Claim 4, **characterized in that** two rows (27, 28) of injection holes (24a, 24b) arranged towards the circumference are provided and the diameter of the injection holes (24a) in an inner row (27) lying closer to the central injection hole (22) is larger than the diameter of the injection holes (24b) in an outer row (28).

6. Fuel injection system according to Claim 5, **characterized in that** the diameter of the injection holes (24a, 24b) is smaller the further they are spaced apart from the central injection hole (22).

7. Fuel injection system according to Claim 5 or 6, **characterized in that** the number of injection holes (24b) of the outer row (28) is double the number of injection holes (24a) of the inner row (27).

8. Fuel injection system according to Claim 7, **characterized in that** every further outer row (23) of injection holes (24) arranged towards the circumference has twice as many injection holes (24) as the next row (23) inside it.

9. Fuel injection system according to one of Claims 4 to 8, **characterized in that** the injection holes (24a) of the inner row (27) are arranged at an offset angle to the injection holes (24b) of the outer row (28), in each case two injection holes (24b) of the outer row (28) being arranged symmetrically with respect to a straight line (31) which extends from the central injection hole (22) through each of the injection holes (24a) of the inner row (27) to the outer row (28).

## Revendications

1. Système d'injection de carburant (1) pour des moteurs à combustion interne comportant une soupape d'injection de carburant (12) qui injecte directement du carburant dans une chambre de combustion (2) formée par une paroi de cylindre (3) dans laquelle est guidé un piston (5) et comportant une bougie (8) en saillie dans la chambre de combustion (2), d'après lequel la soupape d'injection de carburant (12) produit un jet d'injection (13) conique dans la chambre de combustion (2) par au moins une rangée (23) d'orifices d'injection (24) disposés à la périphérie sur un corps de soupape (20) de la soupape d'injection de carburant (24),
**caractérisé en ce que**
le corps de soupape (20) présente en outre un orifice d'injection (22) disposé centralement qui produit pour le jet d'injection (13) une zone centrale, enrichie en carburant, qui arrive jusqu'à la bougie (8).

2. Système d'injection de carburant selon la revendication 1,
**caractérisé en ce qu'**
on prévoit deux rangées (27, 28) d'orifices d'injection (24a, 24b).

3. Système d'injection de carburant selon la revendication 1,
**caractérisé en ce que**
le diamètre des orifices d'injection (24 ; 24a, 24b) de l'au moins une rangée (23 ; 27, 28) et de l'orifice d'injection central (22) sont différents.

4. Système d'injection de carburant selon l'une des revendications 1 à 3,
**caractérisé en ce que**
le diamètre de l'orifice d'injection central (22) est plus grand que le diamètre des orifices d'injection (24 ; 24a, 24b) disposés à la périphérie de l'au moins une rangée (23 ; 27, 28).

5. Système d'injection de carburant selon la revendication 4,
**caractérisé en ce qu'**
on prévoit deux rangées (27, 28) d'orifices d'injection (24a, 24b) disposés à la périphérie et le diamètre des orifices d'injection (24a) dans une rangée (27) intérieure la plus proche de l'orifice d'injection central (22) est plus grand que le diamètre des orifices d'injection (24b) dans une rangée (28) extérieure.

6. Système d'injection de carburant selon la revendication 5,
**caractérisé en ce que**
les orifices d'injection (24a, 24b) ont un diamètre d'autant plus petit qu'ils sont éloignés de l'orifice d'injection central (22).

7. Système d'injection de carburant selon la revendication 5 ou 6, **caractérisé en ce que**
le nombre des orifices d'injection (24b) de la rangée extérieure, (28) est le double du nombre des orifices d'injection (24a) de la rangée intérieure (27).

8. Système d'injection de carburant selon la revendication 7,
**caractérisé en ce que**
chacune des autres rangées extérieures (23) d'orifices d'injection (24) disposés à la périphérie présente deux fois plus d'orifices d'injection (24) que la rangée intérieure (23) la plus proche.

9. Système d'injection de carburant selon l'une des revendications 4 à 8,
**caractérisé en ce que**
les orifices d'injection (24a) de la rangée intérieure (27) présentent un décalage angulaire par rapport aux orifices d'injection (24b) de la rangée extérieure (28), à chaque fois deux orifices d'injection (24b) de la rangée extérieure (28) étant disposés symétriquement par rapport à une demi-droite (31) qui s'étend de l'orifice d'injection central (22) jusqu'à la rangée extérieure (28) en passant par chacun des orifices d'injection (24a) de la rangée intérieure (27).
